(19) Europäisches Patentamt / European Patent Office / Office européen des brevets

(11) **EP 4 026 235 B1**

(12) **EUROPEAN PATENT SPECIFICATION**

(45) Date of publication and mention
of the grant of the patent:
**22.07.2026 Bulletin 2026/30**

(21) Application number: **20785831.7**

(22) Date of filing: **01.09.2020**

(51) International Patent Classification (IPC):
**H02K 7/102** (2006.01)      **H02K 11/33** (2016.01)
**H02K 7/18** (2006.01)

(52) Cooperative Patent Classification (CPC):
**H02K 7/102; H02K 7/1023; H02K 7/1846;
H02K 11/33**

(86) International application number:
**PCT/IB2020/058123**

(87) International publication number:
**WO 2021/044294 (11.03.2021 Gazette 2021/10)**

(54) **ELECTRIC MOTOR FOR ELECTRIC VEHICLE**

**ELEKTROMOTOR FÜR EIN ELEKTROFAHRZEUG**

**MOTEUR ÉLECTRIQUE POUR VÉHICULE ÉLECTRIQUE**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **02.09.2019 IT 201900015406**

(43) Date of publication of application:
**13.07.2022 Bulletin 2022/28**

(73) Proprietor: **Texa Dynamics S.R.L.
31050 Monastier di Treviso (TV) (IT)**

(72) Inventor: **VIANELLO, Bruno
31050 Monastier di Treviso (TV) (IT)**

(74) Representative: **Citron, Massimiliano
Via Primo Maggio, 6
31020 San Fior (TV) (IT)**

(56) References cited:
**EP-A1- 2 720 917          EP-A1- 3 517 336
US-A1- 2012 067 676      US-A1- 2016 236 658**

**Description**

The invention refers to an electric motor for an electric vehicle and the vehicle comprising the motor, in particular a braking system and more specifically a vehicle with a double braking system.

Electric vehicles typically use an electric motor for propulsion and regenerative braking that converts the vehicle's kinetic energy into electrical energy. However, for practical reasons the full braking torque through regenerative braking alone is insufficient, and an additional friction-based braking system is required.

GB2472392 illustrates a vehicle with a hybrid braking system, regenerative braking and electromechanical braking. Embedded inside each wheel is an electric motor controlled via bus by an external master controller. The master controls the operation of the electric motors of the drive wheels, and may force them to generate a regenerative braking torque. Coupled to each wheel is also a mechanical friction-based braking disc, which can be engaged by a caliper electrically driven by an electric control signal emitted via bus by a braking controller in turn controlled by the master device.

US 2016/236658, US 2012/067676 A1, EP 2 720 917 A1 and EP 3 517 336 A1 disclose an electric motor to be associated with a vehicle wheel.

The electronic structure of the master device and the braking controller is very complex.

In addition, installing the motor in the drive wheel increases its weight, with disadvantages for the suspension, and prevents standardization and easy maintenance, since each motor must be designed for the wheel hosting it.

Therefore it is desired to propose a motor and system that improves this state of the art, wherein the system and motor is defined in the attached claims, in which the dependent ones define advantageous variants.

An electric motor is then presented comprising the features of Claim 1.

The structure of the above mentioned motor is self-sufficient for its control, being equipped with the necessary circuits on board. Therefore the master/slave structure of GB2472392 is avoided.

Besides, the motor is not installed in a drive wheel, with advantage for standardization and easy maintenance. Other advantages concern the fact that the remote position of the motor with respect to the wheel allows not to weigh down the wheel, which being a mass downstream the shock absorber could create destabilization.

The braking member is e.g. an electromechanical member, in particular a caliper; or a pneumatic member, such as a hydraulic caliper.

According to a variant, the logic unit is configured to control the electronic power stage and the electronic control circuit to simultaneously generate the resistant torque via the braking member and the braking action developed by the electric motor. This results in a coordinated action of the braking means. The simultaneous action of the braking member and the braking action developed by the electric motor can take place over the entire duration of the braking or only in a time sub-interval.

According to a variant, the motor comprises a sensor configured to detect the relative position of the braking member with respect to the ring and send to the logic unit a signal indicating the relative position. In this way, a precise, e.g. feedback, positional control can be performed on the braking member.

According to a variant, the logic unit is configured to control the electronic power stage and the electronic control stage so that the resistant torque follows a desired profile over time. The profile may be generated internally within the logic unit or may be contained in a remote signal outside the motor, in particular a signal generated by a braking level sensor that can be operable by a person, such as a brake lever or pedal.

According to a variant, said electronic circuit is mounted inside a fixed casing from which the stator protrudes, for compactness and ease of electrical wiring.

According to a variant, the logic unit is configured to control the electronic power stage so as to impose a driving torque on the rotor, in particular so that the driving torque follows a desired profile over time. The profile may be generated internally in the logic unit or may be contained in a remote signal outside the motor, in particular a signal generated by a speed level sensor operatable by a person, such as a lever or an accelerator pedal.

According to a variant, the outer casing of the motor is finned to dissipate heat.

The invention is directed to an axial-flow electric motor, that is a motor having a stator equipped with windings placed in circular series about said rotation axis. Each winding serves to create a magnetic field, with a polar axis parallel to the rotation axis, through which to set the rotor into rotation thanks to the magnetic interaction between the generated magnetic fields and a corresponding circular series of magnetic elements of the rotor. This type of motor has a more complex structure than radial-flux motors but is lighter and smaller the power being the same. The stator is sandwiched between two rotors axially spaced along the rotation axis.

Another aspect of the invention concerns a vehicle, e.g. a car or a tractor, comprising a motor as defined above to drive and brake a driving wheel of the vehicle.

The advantages of the invention will be clearer from the following description of a preferred embodiment, referring to the attached drawing in which

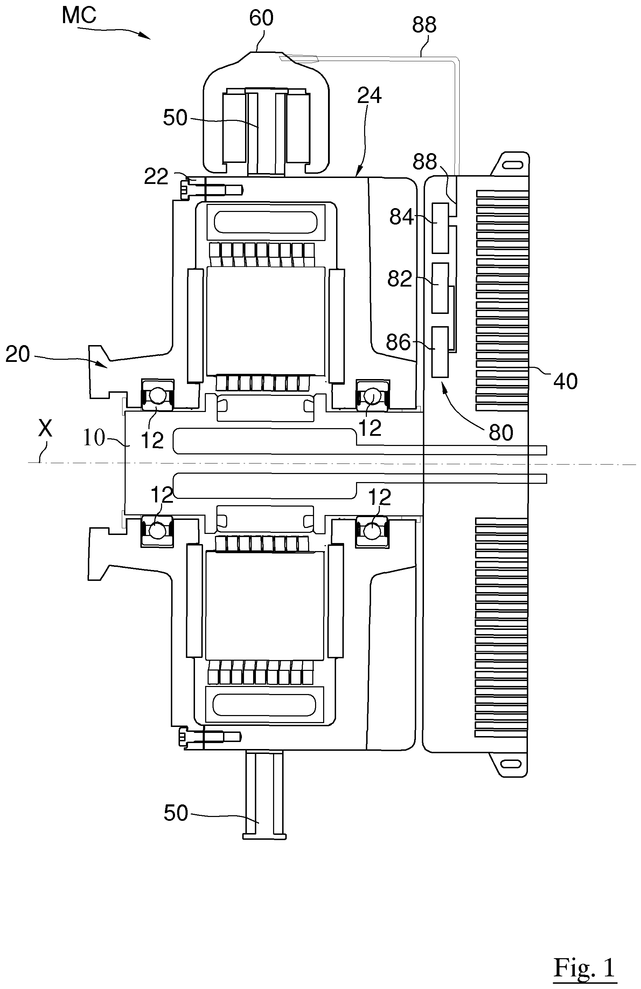

- Fig. 1 shows a cross-sectional view of an electric motor.

The motor MC shown in Fig. 1 serves to allow - and also to brake - the rotation of a wheel (not shown) of a vehicle not shown, e.g. a car or a truck.

The motor MC comprises a central stator 10 and a rotor 20 rotatably pivoted via bearings 12 around the stator 10 to rotate about an axis X.

The stator 10, which protrudes from a casing 40, comprises well-known electric windings in order to push the rotor 20 into rotation through a magnetic field generated by the windings.

The rotor 20 comprises an outer casing 22 of the motor MC, e.g. a bell, on whose outer surface 24 a ring 50 is fixed and arranged coaxially to the axis X.

On the ring 50 can act a caliper 60 which is integral with the stator 10 (and/or with the casing 40) and configured to tighten the ring 50.

Inside the casing 40 is placed an electronic circuit 80 composed of

- an electronic power stage 82 to drive the stator windings 10,
- an electronic control stage 84 to control the caliper 60 via a line 88, e.g. an electrical line;
- a microprocessor 86 programmed to control the electronic power stage 82 and the electronic control stage 84.

The microprocessor 86 is programmed in a known way to drive the electronic power stage 82 to rotate the rotor 10. For example, the microprocessor 86 can impose a torque on the rotor 10 following a reference signal, e.g. generated by a speed level sensor that can be operated by a person, such as a lever or an accelerator pedal.

The microprocessor 86 is in particular programmed to drive the electronic power stage 82 and the electronic control stage 84 to brake the rotor 10.

The braking action may be generated by driving the electronic power stage 82 so that the motor MC acts as an electric power-generating brake, and/or by driving the electronic control stage 84 to tighten the caliper 60 on the ring 50.

In the first case, the electric energy generated by the motor MC is derived from the conversion of kinetic energy of the wheel and/or vehicle, and e.g. it can be stored in a battery (not shown).

In the second case the kinetic energy of the wheel and/or vehicle is converted by the friction between the caliper 70 and the ring 60 into heat.

An example of a control algorithm executed by the microprocessor 86 during a braking phase is the following. Defined

RT_Target the braking torque required to the motor MC,
RT_Mmax the maximum braking torque manageable by the motor MC,
RT_Mder the derating torque according to motor/stator temperature,
RT_Bms the braking torque limit determined by the battery charge state,
RT_Rmax the torque limit obtainable by regenerative means,
RT_C the braking torque on the rotor 10 to be applied via the caliper 60,
at each sampling interval (e.g. with a control frequency of 1 KHz) the microprocessor 86 calculates:

$$RT\_Rmax = min \{|RT\_Mmax| - |RT\_Mder|, |RT\_Bms|\} \ e$$

$$RT\_C = min \ (0, \ RT\_Target - RT\_Rmax \ \}.$$

## Claims

1. Axial-flux electric motor comprising:

   - a central stator (10);
   - two rotors (20, 22) axially spaced along a rotation axis (X) thereof and each comprising a circular series of magnetic elements, one rotor (20) comprising an outer casing (22) of the motor which is rotatably pivoted around the stator (10) to rotate about an axis (X);
   - a ring (50) integral with the outer circumferential surface (24) of the casing (22) and arranged coaxially to said axis (X);
   - a braking member (60) which is integral with the stator (10) and configured to brake the ring (50);

     wherein the central stator (10) is

sandwiched between the two rotors (20, 22), and

equipped with windings arranged in a circular series around said rotation axis (X), each winding for creating a magnetic field, with a polar axis parallel to the rotation axis, through which to rotate the rotors (20, 22) thanks to the magnetic interaction between the generated magnetic fields and the corresponding circular series of magnetic elements of the rotors (20, 22);

the axial-flux electric motor further comprising

- an electronic circuit (80) mounted on/in the stator (10) comprising:

  ∘ an electronic power stage (82) for driving the stator windings to control the rotation of the rotors (20, 22), and
  ∘ an electronic control stage (84) for the braking member (60), and
  ∘ a logic unit (86) configured to control the electronic power stage (82) and the electronic control stage (84) so as to generate a resistant torque to brake the rotors (20, 22) by

    driving the stator windings (10) so that the motor acts as an electric power-generating brake and
    driving the electronic control stage (84) to activate the braking member (60) on the ring (50) to brake the ring (50).

2. Motor according to claim 1, wherein the braking member (60) is an electromechanical member or a pneumatic member.

3. Motor according to claim 1 or 2, wherein the logic unit (86) is configured to control the electronic power stage (82) and the electronic control circuit (80) to simultaneously generate the resistant torque through the braking member (60) and the braking action developed by the electric motor.

4. Motor according to claim 1 or 2 or 3, wherein the motor comprises a sensor configured

    to detect the relative position of the braking member with respect to the ring (50) and
    to send to the logic unit (86) a signal indicative of the relative potion.

5. Motor according to any one of the preceding claims, wherein the logic unit (86) is configured to control the electronic power stage (82) and the electronic control stage (84) so that the resisting torque follows a desired course over time.

6. Motor according to any one of the preceding claims, wherein said electronic circuit (80) is mounted inside a fixed casing (40) from which the stator (10) protrudes.

7. Motor according to claim 6, wherein the casing is finned to dissipate heat.

8. Motor according to any one of the preceding claims, wherein the logic unit (86) is configured to control the electronic power stage (84) so as to impose on the rotors (20, 22) a driving torque which follows a desired course over time.

9. Motor according to any one of the preceding claims claim, wherein said outer casing (22) is a bell.

10. Vehicle comprising

    a driving wheel,
    a motor according to any preceding claim to drive and brake the driving wheel.

11. Vehicle according to claim 10, **characterized by** being a car or a tractor.

12. Vehicle according to claim 10 or 11, wherein the motor is not installed in a drive wheel, namely it is placed in remote position with respect to the wheel.

**Patentansprüche**

1. Axialfluss-Elektromotor, umfassend:

- einen zentralen Stator (10);
- zwei Rotoren (20, 22), die entlang einer Rotationsachse (X) desselben axial beabstandet sind und jeweils eine kreisförmige Reihe von magnetischen Elementen umfassen, wobei ein Rotor (20) ein Außengehäuse (22) des Motors umfasst, das drehbar um den Stator (10) gelagert ist, um sich um eine Achse (X) zu drehen;
- einen Ring (50), der einstückig mit der äußeren Umfangsfläche des Gehäuses (22) verbunden und koaxial zu der Achse (X) angeordnet ist;
- ein Bremsorgan (60), das einstückig mit dem Stator (10) verbunden und so konfiguriert ist, dass es den Ring (50) bremst;

wobei der zentrale Stator (10) zwischen den beiden Rotoren (20, 22) sandwichartig angeordnet ist und mit Wicklungen ausgestattet ist, die in einer kreisförmigen Reihe um die Rotationsachse (X) angeordnet sind, wobei jede Wicklung zur Erzeugung eines Magnetfelds mit einer polaren Achse parallel zur Rotationsachse dient, durch welches die Rotoren (20, 22) dank der magnetischen Wechselwirkung zwischen den erzeugten Magnetfeldern und der entsprechenden kreisförmigen Reihe von magnetischen Elementen der Rotoren (20, 22) in Drehung versetzbar sind;
wobei der Axialfluss-Elektromotor ferner umfasst:

- eine elektronische Schaltung (80), die an/in dem Stator (10) montiert ist, umfassend:

eine elektronische Leistungsstufe (82) zum Ansteuern der Statorwicklungen, um die Rotation der Rotoren (20, 22) zu steuern, und
eine elektronische Steuerstufe (84) für das Bremsorgan (60), und
eine Logikeinheit (86), die so konfiguriert ist, dass sie die elektronische Leistungsstufe (82) und die elektronische Steuerstufe (84) so steuert, dass ein Widerstandsmoment erzeugt wird, um die Rotoren (20, 22) zu bremsen, und zwar durch:

Ansteuern der Statorwicklungen (10), so dass der Motor als elektrische generatorische Bremse wirkt, und
Ansteuern der elektronischen Steuerstufe (84), um das Bremsorgan (60) an dem Ring (50) zu aktivieren, um den Ring (50) zu bremsen.

2. Motor nach Anspruch 1, wobei das Bremsorgan (60) ein elektromechanisches Organ oder ein pneumatisches Organ ist.

3. Motor nach Anspruch 1 oder 2, wobei die Logikeinheit (86) so konfiguriert ist, dass sie die elektronische Leistungsstufe (82) und die elektronische Schaltung (80) steuert, um gleichzeitig das Widerstandsmoment durch das Bremsorgan (60) und die durch den Elektromotor entwickelte Bremswirkung zu erzeugen.

4. Motor nach Anspruch 1, 2 oder 3, wobei der Motor einen Sensor umfasst, der so konfiguriert ist, dass er die relative Position des Bremsorgans in Bezug auf den Ring (50) erfasst und an die Logikeinheit (86) ein Signal sendet, das die relative Position angibt.

5. Motor nach einem der vorhergehenden Ansprüche, wobei die Logikeinheit (86) so konfiguriert ist, dass sie die elektronische Leistungsstufe (82) und die elektronische Steuerstufe (84) so steuert, dass das Widerstandsmoment einem gewünschten zeitlichen Verlauf folgt.

6. Motor nach einem der vorhergehenden Ansprüche, wobei die elektronische Schaltung (80) innerhalb eines festen Gehäuses (40) montiert ist, aus dem der Stator (10) herausragt.

7. Motor nach Anspruch 6, wobei das Gehäuse gerippt ist, um Wärme abzuleiten.

8. Motor nach einem der vorhergehenden Ansprüche, wobei die Logikeinheit (86) so konfiguriert ist, dass sie die elektronische Leistungsstufe (84) so steuert, dass den Rotoren (20, 22) ein Antriebsmoment auferlegt wird, das einem gewünschten zeitlichen Verlauf folgt.

9. Motor nach einem der vorhergehenden Ansprüche, wobei das Außengehäuse (22) eine Glocke ist.

**10.** Fahrzeug, umfassend:

ein Antriebsrad,
einen Motor nach einem der vorhergehenden Ansprüche zum Antreiben und Bremsen des Antriebsrads.

**11.** Fahrzeug nach Anspruch 10, **dadurch gekennzeichnet, dass** es ein Auto oder ein Traktor ist.

**12.** Fahrzeug nach Anspruch 10 oder 11, wobei der Motor nicht in einem Antriebsrad installiert ist, sondern an einer in Bezug auf das Rad entfernten Position angeordnet ist.

**Revendications**

**1.** Moteur électrique à flux axial comprenant :

- un stator central (10) ;
- deux rotors (20, 22) espacés axialement le long d'un axe de rotation (X) de celui-ci et comprenant chacun une série circulaire d'éléments magnétiques, un rotor (20) comprenant un carter extérieur (22) du moteur qui est pivoté de manière rotative autour du stator (10) pour tourner autour d'un axe (X) ;
- une bague (50) solidaire de la surface circonférentielle extérieure du carter (22) et disposée coaxialement audit axe (X) ;
- un organe de freinage (60) qui est solidaire du stator (10) et configuré pour freiner la bague (50) ;

dans lequel le stator central (10) est

pris en sandwich entre les deux rotors (20, 22), et
est équipé d'enroulements disposés en une série circulaire autour dudit axe de rotation (X), chaque enroulement étant destiné à créer un champ magnétique, avec un axe polaire parallèle à l'axe de rotation, à travers lequel les rotors (20, 22) sont mis en rotation grâce à l'interaction magnétique entre les champs magnétiques générés et la série circulaire correspondante d'éléments magnétiques des rotors (20, 22) ;

le moteur électrique à flux axial comprenant en outre :

- un circuit électronique (80) monté sur/dans le stator (10) comprenant :

un étage électronique de puissance (82) pour piloter les enroulements du stator afin de commander la rotation des rotors (20, 22), et
un étage électronique de commande (84) pour l'organe de freinage (60), et
une unité logique (86) configurée pour commander l'étage électronique de puissance (82) et l'étage électronique de commande (84) de manière à générer un couple résistant pour freiner les rotors (20, 22) en:

pilotant les enroulements du stator (10) de sorte que le moteur agisse comme un frein électrique générateur d'énergie, et
pilotant l'étage électronique de commande (84) pour activer l'organe de freinage (60) sur la bague (50) afin de freiner la bague (50).

**2.** Moteur selon la revendication 1, dans lequel l'organe de freinage (60) est un organe électromécanique ou un organe pneumatique.

**3.** Moteur selon la revendication 1 ou 2, dans lequel l'unité logique (86) ist configurée pour commander l'étage électronique de puissance (82) et le circuit électronique (80) pour générer simultanément le couple résistant par l'intermédiaire de l'organe de freinage (60) et l'action de freinage développée par le moteur électrique.

**4.** Moteur selon la revendication 1, 2 ou 3, dans lequel le moteur comprend un capteur configuré pour détecter la position relative de l'organe de freinage par rapport à la bague (50) et pour envoyer à l'unité logique (86) un signal indicatif de la position relative.

**5.** Moteur selon l'une quelconque des revendications précédentes, dans lequel l'unité logique (86) est configurée pour commander l'étage électronique de puissance (82) et l'étage électronique de commande (84) de sorte que le couple résistant suive une évolution temporelle souhaitée.

**6.** Moteur selon l'une quelconque des revendications précédentes, dans lequel ledit circuit électronique (80) est monté à l'intérieur d'un carter fixe (40) depuis lequel le stator (10) fait saillie.

**7.** Moteur selon la revendication 6, dans lequel le carter est muni d'ailettes pour dissiper la chaleur.

**8.** Moteur selon l'une quelconque des revendications précédentes, dans lequel l'unité logique (86) est configurée pour commander l'étage électronique de puissance (84) de manière à imposer aux rotors (20, 22) un couple d'entraînement qui suit une évolution temporelle souhaitée.

**9.** Moteur selon l'une quelconque des revendications précédentes, dans lequel ledit carter extérieur (22) est une cloche.

**10.** Véhicule comprenant :

une roue motrice,
un moteur selon l'une quelconque des revendications précédentes pour entraîner et freiner la roue motrice.

**11.** Véhicule selon la revendication 10, **caractérisé en ce qu'**il s'agit d'une voiture ou d'un tracteur.

**12.** Véhicule selon la revendication 10 ou 11, dans lequel le moteur n'est pas installé dans une roue motrice, à savoir qu'il est placé dans une position éloignée par rapport à la roue.

Fig. 1

**EP 4 026 235 B1**

**REFERENCES CITED IN THE DESCRIPTION**

**Patent documents cited in the description**

- GB 2472392 A
- US 2016236658 A
- US 2012067676 A1
- EP 2720917 A1
- EP 3517336 A1